# EUROPEAN PATENT APPLICATION

(11) **EP 4 800 919 A2**
(43) Date of publication of application: **02.09.2026**
(21) Application number: 26151439.2
(22) Date of filing: 12.01.2026
(51) Int. Cl.: H02S 20/25

(54) **A PHOTOVOLTAIC ROOFING SLATE, METHOD OF MANUFACTURE, KIT OF PARTS, AND TOOLING**

(30) Priority: 10.01.2025 GB 202500350; 08.05.2025 CN 202520903128 U
(71) Applicant: Lagan Building Solutions Limited, Belfast BT1 3BG (GB)
(72) Inventor: Bell, Richard Edward, Crumlin, Northern Ireland, BT29 (GB); Lagan, Peter Gerard, Belfast, Northern Ireland, BT1 3BG (GB)
(74) Representative: Hanna, John Philip

(57) **Abstract**

A photovoltaic roofing slate for use as a roofing product. The photovoltaic roofing slate has a photovoltaic cell, a backsheet, and at least one encapsulant layer arranged over the backsheet and cell. A method of manufacturing a photovoltaic roofing slate involving printing, arranging, laminating, and moulding method steps. An assembly for manufacturing a photovoltaic roofing slate. A kit of parts for a photovoltaic roofing slate, a tooling assembly, a method of forming components of a tooling assembly.

## Description

The invention relates to a photovoltaic roofing slate, a method of manufacture, a kit of parts, and a tooling arrangement.

### BACKGROUND

Roofing slates have been used for many years in certain parts of the world. The mining and trade of slate in some cases significantly shaped the culture of these places. One consequence of this historical development is that the appearance of natural slate is admired and sought after, whereas aspects of a roof which appear to employ other coverings are less desirable.

In more recent years, people have recognised the opportunity to integrate photovoltaic products in and/or on the outer surfaces of buildings, in particular the roof, to collect and convert solar energy. Such photovoltaic products may take the form of solar panels, and solar tiles which may be integrated as a roofing product with one or more mounting systems such as mounting plates, frames, trays, brackets and clamps. In this manner, the integrated photovoltaic roofing products and mounting systems replace roofing products which do not comprise photovoltaic products. Integrated solar roofing products represent an advancement in providing aesthetically appealing electricity-generating products because these products can be installed in line with the surface of the main outer roofing layer - providing a neater appearance compared with having solar panels mounted on top of an outer covering layer of a roof. However, available building-integrated solar roofing products may still appear artificial rather than natural under certain conditions, in terms of colour or texture. Furthermore, as mentioned, such building-integrated solar roofing products require mounting systems which are integrated into the roof, and which require specific training to work with, leading to a shortage of workforce able to install such products.

It is an object of the invention to obviate or mitigate the problems outlined above.

### SUMMARY OF THE INVENTION

According to a first aspect of the invention there is provided a photovoltaic roofing slate for forming an overlapping outer covering layer of a roof, the photovoltaic roofing slate comprising:
at least one photovoltaic cell encapsulated between a backsheet and a body of polymeric encapsulant, wherein an upper surface of the body of polymeric encapsulant comprises a three-dimensional surface contour for reflecting visible light in use to provide an appearance of a natural slate, the three-dimensional surface contour extending over at least a portion of the at least one photovoltaic cell.

According to a second aspect of the invention there is provided a photovoltaic roofing slate for forming an outer covering layer of a roof, the photovoltaic roofing slate comprising:
at least one photovoltaic cell encapsulated between a backsheet and a body of encapsulant, wherein an upper surface of the photovoltaic roofing slate comprises a three-dimensional surface contour for reflecting visible light in use to provide an appearance of a natural slate, the three-dimensional surface contour extending over at least a portion of the at least one photovoltaic cell.

Ideally, the body of encapsulant is a body of polymeric encapsulant material.

Ideally, the appearance of a natural slate is achieved by the three-dimensional surface contour being a surface contour which is an imitation or a reproduction of a typical or actual surface contour of a natural slate produced from a natural slate-forming rock. A surface contour of a natural slate is formed when a surface of a slate-forming rock is exposed by separating a body of slate-forming rock along a plane of cleavage of the slate-forming rock.

Although slate is a preferred roofing product due to its physical qualities, the present invention utilises the appearance of natural slate rather than natural slate itself and therefore when we say "three-dimensional surface contour for reflecting visible light in use to provide an appearance of a natural slate" it is understood that said appearance can be achieved by other forms of rock such as those mentioned below or any other having an appearance comparable to natural slate.

Ideally, the three-dimensional surface contour is a surface contour which is a reproduction of a typical or actual surface contour of a natural slate produced from a metamorphic rock comprising any one of: metalutite, schist, phyllite, quartzite, slate, or any other metamorphic rock having an appearance comparable to that of natural slate, or a typical or actual surface contour of a natural product produced by a sedimentary stone such as shale or any other sedimentary stone having an appearance comparable to that of natural slate.

Ideally, the three-dimensional surface contour has a matte grainy appearance comprising longitudinal grains, waves, bands, stripes, ridges, crenulations, and/or of ribbons.

Ideally, the three-dimensional surface contour has a riven appearance.

Ideally, the three-dimensional surface contour has an appearance characteristic of natural Del Carmen, or Valdeorras (Spanish) slate or of any other slate producing region/mine.

Ideally, the longitudinal grains, waves, bands, stripes, ridges, crenulations, and/or ribbons have a maximum deviation relative to a best-fit reference plane within a predetermined range.

Ideally, the predetermined range is obtained by measurement of a surface contour of a natural slate or comparable natural product.

Ideally, the longitudinal grains, waves, bands, stripes, ridges, crenulations, and/or ribbons have a maximum deviation of between ± 100 microns (0.1mm) and ± 1mm relative to a best-fit reference plane. The longitudinal grains, waves, bands, stripes, ridges, crenulations, and/or of ribbons may have a maximum deviation less than the lower limit of this range or more than the upper limit of this range.

By "best fit reference plane" we mean a plane obtained by a least-squares method. A best fit reference plane can be obtained by numerical methods utilising measurements of points on the surface of a natural slate or comparable surface.

Ideally, the three-dimensional surface contour comprises one feature from the group comprising: longitudinal grains, waves, bands, stripes, ridges, crenulations, and/or ribbons within the predetermined deviation range in a given predetermined area of the photovoltaic roofing slate.

Ideally, the three-dimensional surface contour has a plurality of features from the group comprising: longitudinal grains, waves, bands, stripes, ridges, crenulations, and/or of ribbons within this range in a given predetermined area of the photovoltaic roofing slate.

Ideally, the photovoltaic roofing slate comprises a lap-forming portion for being overlapped in use by at least one adjacent roofing slate.

Ideally, the photovoltaic roofing slate comprises a portion for being exposed to sunlight in use not being overlapped in use by any adjacent roofing slates.

Ideally, the at least one photovoltaic cell is arranged in the portion for being exposed to sunlight in use.

Ideally, the photovoltaic roofing slate comprises a mounting means for allowing the photovoltaic roofing slate to be mounted to one or more components of a structural framework of a roof in use.

Ideally, the mounting means of the photovoltaic roofing slate comprises one or more mechanical fastening means for fastening the photovoltaic roofing slate to one or more components of a structural framework of a roof in use.

Ideally, the mounting means of the photovoltaic roofing slate comprises one or more mechanical fastening means receiving means for fastening the photovoltaic roofing slate to one or more components of a structural framework of a roof in use.

Ideally, the one or more mechanical fastening means receiving means comprises one or more apertures extending from a top surface to a bottom surface of the photovoltaic roofing slate. By "top surface" and "bottom surface" we mean a surface which faces away from the structural framework of the roof in use and a surface which faces towards the structural framework of the roof in use, respectively.

Ideally, the mechanical fastening means receiving means comprises countersinks.

Ideally, the mechanical fastening means receiving means comprises countersinks in the body of encapsulant.

Ideally, the mechanical fastening means receiving means comprises countersinks in the cover layer. The cover front layer is described further below. Advantageously, the countersinks ensure a flush finish of mechanical fastening means secured in the mechanical fastening means receiving means through the body of encapsulant.

Ideally, in use, mechanical fastening means are also secured through the backsheet and, where there is one, the cover layer described in more detail below.

Ideally, the countersinks comprise moulded portions of the body of encapsulant.

Ideally, the countersinks comprise moulded portions in the cover layer.

Ideally, one or more of the mechanical fastening means receiving means are located in the lap-forming portion of the photovoltaic roofing slate. Advantageously, in use, when mechanical fastening means are installed in the one or more mechanical fastening means receiving means in the lap-forming portion, they are hidden by the overlapping adjacent slates.

Ideally, the one or more mechanical fastening means receiving means comprise nail holes in the backsheet.

Ideally, the one or more mechanical fastening means receiving means located in the lap-forming portion comprise nail holes in the backsheet.

Ideally, the nail holes in the backsheet are preformed nail holes, meaning formed in a production facility of the photovoltaic roofing slate, and not at the installation site.

Ideally, one or more of the mechanical fastening means receiving means are located in a portion of the photovoltaic roofing slate located away from the lap forming portion. Advantageously, a mechanical fastening means installed away from the lap forming portion helps to prevent uplift of the slate by wind in use. This is because in a traditional method of laying a slate roof, the lap-forming portion comprising the nail holes is located towards an upper portion of the slate and a lower portion of the slate overlaps a lower slate (or two lower slates) but this lower portion is free to move upwards by wind passing underneath the slate in a direction from the lower portion of the slate to the upper portion of the slate (for example, in a direction up the pitch of the roof). Ideally, the mechanical fastening means receiving means located in a portion away from the lap forming portion is located towards a lower in use portion of the slate.

Ideally, the one or more mechanical fastening means receiving means located away from the lap-forming portion comprise countersinks in the body of encapsulant.

Ideally, the one or more mechanical fastening means receiving means located away from the lap-forming portion comprise holes for copper crampions and/or disc rivets in the backsheet.

Ideally, the backsheet is rectangular.

Ideally, the backsheet is between forty and sixty centimetres long.

Ideally, the backsheet is between twenty and thirty centimetres wide.

Ideally, the photovoltaic roofing slate is between five and fifteen centimetres thick. This thickness includes a junction box secured to an underside surface of the backsheet.

Ideally, the backsheet/cell/encapsulant/front layer laminate is less than five centimetres thick.

Ideally, the backsheet/cell/encapsulant/front layer laminate is between one and five centimetres thick.

Ideally, the backsheet/cell/encapsulant/front layer laminate is less than one centimetre thick.

Ideally, the at least one photovoltaic cell is rectangular.

Ideally, the at least one photovoltaic cell is square.

Ideally, the at least one photovoltaic cell has an angular orientation the same as that of the backsheet. By this we mean that sides of the at least one photovoltaic cell are parallel with sides of the backsheet.

Ideally, there is a minimum separation between the at least one photovoltaic cell and side edge portions of the backsheet. Advantageously, a minimum separation ensures effective encapsulation by the body of encapsulant.

Ideally, the minimum separation is between one and five centimetres.

Ideally, the body of encapsulant covers the portion of the photovoltaic roofing slate for being exposed to sunlight in use.

Ideally, the body of encapsulant covers the lap-forming portion of the photovoltaic roofing slate.

Ideally, the body of encapsulant covering the lap-forming portion of the photovoltaic roofing slate does not comprise the three-dimensional surface contour. Advantageously, the three-dimensional surface contour is not required to be formed in the body of encapsulant in the lap-forming portion because this part of the slate is not seen in use. Reducing the size of the three-dimensional surface contour reduces the cost to manufacture the photovoltaic roofing slate because smaller moulding tools can be used for producing the three-dimensional surface contour.

Ideally, the body of encapsulant entirely covers an upper face of the backsheet.

Ideally, the three-dimensional surface contour entirely covers the body of encapsulant.

Ideally, the body of encapsulant does not comprise any glass.

Ideally, the photovoltaic roofing slate comprises a central portion.

Ideally, the photovoltaic roofing slate comprises one or more edge portions.

Ideally, the at least one photovoltaic cell is located in the central portion of the photovoltaic roofing slate.

Ideally, the one or more edge portions of the photovoltaic roofing slate surround the central portion of the photovoltaic roofing slate.

Ideally, the body of encapsulant is arranged over the central portion and the one or more edge portions.

Ideally, the body of encapsulant has the same composition over the central portion as over the one or more edge portions of the photovoltaic roofing slate. Advantageously, this means that a single piece of encapsulant can be used in a single method step to apply the body of encapsulant to the edge portions and to the central portion, thereby encapsulating the cell and imparting the three-dimensional surface contour in a single method step. Advantageously, even where encapsulation and forming of the three-dimensional surface contour does not occur in a single method step, the body of encapsulant having the same composition over the central portion as over the one or more edge portions simplifies the design and production of the photovoltaic roofing slate. This is compared to where the central and edge portions are either made from different materials, or are two pieces of the same type of material but the pieces requiring joining between the edge portions and central portion.

Ideally, the photovoltaic roofing slate comprises a colouring means. Advantageously, the colouring means causes the photovoltaic roofing slate to have an appearance characteristic of a natural slate when reflecting visible light in use.

Ideally, the colouring means causes the photovoltaic roofing slate to have one of: a grey appearance or a grey-blue appearance, when reflecting visible light in use, or any other colour appearance characteristic of natural slate.

Ideally, the colouring means causes the photovoltaic roofing slate to have a colour appearance of Penrhyn Bangor Blue.

Ideally, the colouring means provides a darkening effect to the photovoltaic roofing slate when reflecting visible light in use.

By this we mean that the colouring means absorbs visible light in a predetermined range of wavelengths to allow the slate to have a colour appearance characteristic of natural slate.

Ideally, the colouring means comprises one or more layers of coloured material.

By "coloured material" we mean a material which has received thereon (or had incorporated therein) a colourant/colourant additive, or colourant/colourant additive-containing composition. Example colourant/colourant additives are dyes and pigments, and example colourant/colourant additive-containing compositions are dyes/pigment combinations, or dyes and/or pigments in a composition with other components such as one or more substances from a group of solvents, binders, and/or fillers.

Ideally, the colouring means comprises one or more layers of coloured polymeric material.

Ideally, the colouring means comprises one or more layers of material comprising one or more pigments, dyes, or any other colourant substance.

Ideally, the one or more layers of coloured material are arranged within the body of encapsulant.

Ideally, the one or more layers of coloured material are arranged between the body of encapsulant and the backsheet.

Ideally, the one or more layers of coloured material comprises a coloured cover layer.

Ideally, the one or more layers of coloured material comprises a coloured ETFE cover layer.

Ideally, the one or more layers of coloured material comprises a coloured glass cover layer.

Ideally, the one or more layers of coloured polymeric material comprises a coloured thermoplastic material.

Ideally, the one or more layers of the coloured polymeric material comprises coloured EVA.

Ideally, the one or more layers of the coloured polymeric material comprises coloured PVB.

Ideally, the one or more layers of coloured polymeric material comprise coloured POE.

Ideally, the colouring means comprises one or more print-coloured layers.

By "print-coloured" we mean that one or more layers of the photovoltaic roofing slate is printed onto with one or more layers of a colourant containing composition.

Ideally, the colourant containing composition of the colouring means is printed onto the body of encapsulant.

Ideally, the colourant containing composition of the colouring means is printed onto the body of polymeric encapsulant.

Ideally, the colourant containing composition of the colouring means is printed onto the backsheet.

Ideally, the colourant containing composition of the colouring means is printed onto a cover layer.

Ideally, the colourant containing composition of the colouring means is printed by digital printing.

Ideally, the colourant containing composition of the colouring means is printed onto an ETFE cover layer.

Ideally, the colourant containing composition of the colouring means is printed onto a glass cover layer.

Ideally, the colourant containing composition of the colouring means printed onto the glass cover layer is fired to set the colouring means.

Ideally, the colourant containing composition of the colouring means is printed onto one or more layers of the photovoltaic roofing slate in a pattern of small transparent holes surrounded by the colourant containing composition. By a "transparent hole" we mean an area in the printed layer not comprising any pigments, dyes, or any other colourant substance of the colourant containing composition/an area allowing a high degree of light transmission therethrough. Advantageously, the small transparent holes increase light transmission through the colouring means allowing more light to reach the at least one photovoltaic cell while providing an appearance of a solid colour characteristic of natural slate from a sufficient viewing distance of approximately one foot (12 inches) or more.

Ideally, the pattern of transparent holes comprises a regular pattern of holes of the same size.

Ideally, the pattern of transparent holes comprises holes of between 0.25mm to 1 mm wide. The holes may be smaller than 0.25mm or greater than 1 mm wide.

Ideally, the pattern of transparent holes comprises a regular pattern of holes of the same shape.

Ideally, the pattern of transparent holes comprises circular holes.

Ideally, the pattern of transparent holes comprises an array of parallel rows of holes.

Ideally, the body of encapsulant comprises one or more layers of encapsulant material.

Ideally, the body of polymeric encapsulant comprises one or more layers of polymeric encapsulant material.

Ideally, the body of polymeric encapsulant comprises one or more layers of thermoplastic encapsulant material.

Ideally, the body of polymeric encapsulant comprises one or more layers of EVA.

Ideally, the body of polymeric encapsulant comprises one or more layers of PVB.

Ideally, the body of polymeric encapsulant comprises one or more layers of POE.

Ideally, the body of polymeric encapsulant comprises one or more layers of ETFE.

Ideally, the photovoltaic roofing slate comprises at least one internal light-transmitting layer located between the at least one photovoltaic cell and a top surface of the photovoltaic roofing slate.

Ideally, the at least one internal light-transmitting layer comprises a rigid layer. Advantageously, the rigid internal light-transmitting layer rigidifies the photovoltaic roofing slate without reducing significantly light reaching the at least one photovoltaic cell.

Ideally, the at least one internal light-transmitting layer is located between the at least one photovoltaic cell and the colouring means.

Further advantageously, the internal light-transmitting layer increases the distance between the colouring means and the at least one photovoltaic cell. As solar radiation incident on an upper surface of the photovoltaic roofing slate passes around the light-absorbent colourants in the colouring means, the greater distance between the colouring means and the at least one photovoltaic cell allows the solar radiation to spread and cover a greater area on the at least one photovoltaic cell, increasing efficiency of the photovoltaic roofing slate, by allowing for example more excitation in the semiconductor due to an increase in photons absorption.

Ideally, the at least one internal light-transmitting layer is located between the at least one photovoltaic cell and the body of polymeric encapsulant.

Ideally, the at least one internal light-transmitting layer comprises mechanical fastening means receiving means comprising apertures for allowing a mechanical fastening means to be installed therethrough.

Ideally, the least one internal light-transmitting layer comprises a glass layer.

Ideally, the least one internal light-transmitting layer comprises a flat glass layer.

Ideally, the backsheet is rigid.

Ideally, the backsheet rigidifies the photovoltaic roofing slate.

Ideally, the backsheet comprises one or more layers.

Ideally, the backsheet comprises one or more polymeric layers.

Ideally, the backsheet comprises one or more layers of polyvinyl fluoride.

Ideally, the backsheet comprises one or more layers of polyethylene terephthalaye.

Ideally, the backsheet comprises adhesive to hold together a plurality of layers of the backsheet.

Ideally, the backsheet comprises a metal plate.

Ideally, the backsheet comprises a glass plate.

Ideally, the glass plate of the backsheet is a flat glass plate.

Ideally, the backsheet comprises glass-reinforced plastic.

Ideally, the backsheet comprises Kevlar^{®}.

Ideally, the photovoltaic roofing slate comprises a cover layer.

Ideally, the cover layer comprises a layer of polymeric material.

Ideally, the cover layer comprises a layer of fluoropolymer material.

Ideally, the cover layer comprises a layer of ETFE.

Ideally, the cover layer comprises a glass panel.

Ideally, an upper surface of the cover layer comprises the three-dimensional surface contour for reflecting visible light in use to provide an appearance of a natural slate.

Ideally, the upper surface of the cover layer comprises the three-dimensional surface contour compression moulded into the upper surface of the cover layer.

Ideally, the glass panel cover layer is a panel of moulded glass having the three-dimensional surface contour moulded into an upper surface of the layer of glass.

Ideally, a junction box is adhered to an underside face of the backsheet.

Ideally, the backsheet comprises one or more through holes for positive and negative electrical leads from the at least one photovoltaic cell to pass from a top face of the backsheet to an underside face of the backsheet to the junction box.

Ideally, the photovoltaic roofing slate comprises a glare-reducing means.

Ideally, the glare reducing means comprises a surface treatment of one or more layers of the photovoltaic roofing slate.

Ideally, the glare reducing means comprises a surface treatment of one or more layers of the body of encapsulant.

Ideally, the glare reducing means comprises a surface treatment of the cover layer.

Ideally, the junction box comprises positive and negative electrical connections for connecting the photovoltaic roofing slate to an adjacent photovoltaic roofing slate, a battery storage system, and/or an electrical inverter.

Ideally, the three-dimensional surface contour comprises a broad and generally planar central portion arranged about the central portion of the photovoltaic roofing slate. Advantageously, a broad and generally planar central portion is advantageous to ensure effective water runoff.

Ideally, the at least one photovoltaic cell is arranged under the broad and generally planar central portion of the three-dimensional surface contour.

Ideally, the body of encapsulant in the broad and generally planar central portion has a substantially uniform thickness. Advantageously, this ensures that there are no substantially thinner, weaker parts of the body of encapsulant over the cell which may experience greater weathering than thicker parts of the polymeric encapsulant. This provision ensures effective encapsulation over time.

Ideally, the three-dimensional surface contour comprises one or more edge portions arranged about the edge portions of the photovoltaic roofing slate.

Ideally, the body of encapsulant in the one or more edge portions of the slate terminate at one or more edges of the backsheet.

Ideally, the body of encapsulant in the one or more edge portions of the slate decrease in thickness from the broad and generally planar central portion towards one or more terminating edges of the body of encapsulant.

Ideally, the one or more edge portions of the three-dimensional surface contour is an imitation or reproduction of a typical or actual edge surface contour of a natural slate produced by dressing a natural slate using a traditional slate dressing machine or using manual techniques. The edge surface contour of a natural slate comprises stepped surfaces between planes of the natural slate forming rock.

Ideally, the one or more edge portions of the body of encapsulant and the broad and generally planar central portion are formable from the same single piece of encapsulant.

Ideally, the one or more terminating edges of the body of encapsulant are generally straight.

Ideally, the one or more terminating edges of the body of encapsulant comprise one or more notches. Advantageously, this provides an appearance of a natural slate.

According to a third aspect of the invention there is provided a method of manufacturing a photovoltaic roofing slate for forming an overlapping outer covering layer of a roof, the method involving the steps of:
arranging at least one photovoltaic cell between a backsheet and a polymeric encapsulant structure;
applying heat to the polymeric encapsulant structure to form a body of molten or softened polymeric encapsulant;
compressing the body of softened or molten polymeric encapsulant against the at least one photovoltaic cell and the backsheet to form a bonded laminate and impart a three-dimensional surface contour in the body of softened or molten polymeric encapsulant for reflecting visible light in use to provide an appearance of a natural slate, the three-dimensional surface contour extending over at least a portion of the at least one photovoltaic cell; and
cooling the bonded laminate to set the body of softened or molten polymeric encapsulant.

According to a fourth aspect of the invention there is provided a method of manufacturing a photovoltaic roofing slate for forming an outer covering layer of a roof, the method involving the steps of:
arranging at least one photovoltaic cell between a backsheet and an encapsulant structure;
applying heat to the encapsulant structure to form a body of molten or softened encapsulant;
compressing the body of softened or molten encapsulant against the at least one photovoltaic cell and the backsheet to form a bonded laminate;
imparting a three-dimensional surface contour in an upper surface of the photovoltaic roofing slate for reflecting visible light in use to provide an appearance of a natural slate, the three-dimensional surface contour extending over at least a portion of the at least one photovoltaic cell; and
cooling the bonded laminate to set the body of softened or molten encapsulant.

Ideally, the photovoltaic roofing slate is for forming an overlapping outer covering layer of a roof.

Ideally, the step of imparting a three-dimensional surface contour involves importing the three-dimensional surface contour in an upper surface of the body of softened or molten encapsulant.

Ideally, the encapsulant structure/body of softened or molten encapsulant is a polymeric encapsulant material.

Ideally, the method is suitable for manufacturing the photovoltaic roofing slate according to the first or second aspect of the invention.

Ideally, the step of compressing the body of softened or molten encapsulant to impart a three-dimensional surface contour is performed after the step of arranging at least one photovoltaic cell between the backsheet and the encapsulant structure.

Ideally, the step of compressing the body of softened or molten encapsulant against the at least one photovoltaic cell and the backsheet involves two compression steps: a compression-laminating step to form a bonded laminate and a compression moulding step to impart the three-dimensional surface contour.

Alternatively, the step of compressing the body of softened or molten encapsulant against the at least one photovoltaic cell and the backsheet involves only a compression-laminating step to form a bonded laminate.

Ideally, the step of compressing the body of softened or molten encapsulant to impart the three-dimensional surface contour may involve a plurality of compression moulding steps.

Ideally, the compression-laminating step is performed before the compression moulding step is performed.

Ideally, a first mould component is used in the compression-laminating step and a second mould component is used in the compression moulding step.

Ideally, the first mould component used in the compression-laminating step is in the form of a flat plate.

Ideally, the second mould component used in the compression moulding step is shaped to impart the three-dimensional surface contour.

Ideally, the step of compressing the body of softened or molten encapsulant against the at least one photovoltaic cell and the backsheet involves a single laminating and moulding step.

Ideally, a mould component shaped to impart the three-dimensional surface contour is used in the single laminating and moulding step.

Ideally, the step of applying heat to the encapsulant structure to form a body of molten or softened encapsulant is performed at the same time as the step of compressing the body of softened or molten encapsulant against the at least one photovoltaic cell and the backsheet.

Ideally, the step of applying heat to the encapsulant structure is performed before the step of compressing the body of softened or molten encapsulant commences.

Ideally, the step of applying heat to the encapsulant structure is performed before the step of compressing the body of softened or molten encapsulant commences and at the same time the step of compressing the body of softened or molten encapsulant is being performed.

Alternatively, the step of applying heat to the encapsulant structure ceases before the step of compressing the body of softened or molten encapsulant is commenced.

Ideally, the step of cooling the laminate to set the body of softened or molten encapsulant is performed at the same time as the step of compressing the body of softened or molten encapsulant against the at least one photovoltaic cell and the backsheet.

Ideally, the step of cooling the laminate is performed after the step of compressing the body of softened or molten encapsulant.

Ideally, the step of cooling the laminate is performed during and after the step of compressing the body of softened or molten encapsulant.

Alternatively, the step of compressing the body of softened or molten encapsulant ceases before the step of cooling the laminate is commenced.

Ideally, the step of cooling the laminate is performed after the step of applying heat to the encapsulant.

Ideally, the step of applying heat to the encapsulant is ceased before the step of cooling the laminate is commenced.

Ideally, the step of compressing the body of softened or molten encapsulant is performed in one or more compression moulding presses.

Ideally, the step of compressing the body of softened or molten encapsulant is performed in one or more vacuum compression moulding presses.

Ideally, the step of applying heat to the encapsulant structure is performed in one or more compression moulding presses.

Ideally, the step of compressing the body of softened or molten encapsulant involves using hydraulic pressure.

Ideally, the step of compressing the body of softened or molten encapsulant against the at least one photovoltaic cell and the backsheet involves using pneumatic pressure.

Ideally, the method involves the step of forming mechanical fastening means receiving means in the backsheet.

Ideally, the step of forming mechanical fastening means receiving means in the backsheet is performed before the step of arranging at least one photovoltaic cell between a backsheet and the encapsulant structure.

Ideally, the step of forming mechanical fastening means receiving means in the backsheet involves drilling nail holes into the backsheet.

Ideally, the step of arranging the at least one photovoltaic cell between the backsheet and the encapsulant structure involves entirely covering an upper face of the backsheet with the encapsulant structure.

Ideally, the step of compressing the body of softened or molten encapsulant involves compressing an entire upper surface of the body of softened or molten polymeric encapsulant with a mould component suitable for imparting the three-dimensional surface contour on/in an entire upper surface of the body of softened or molten encapsulant.

Ideally, the or each mould component comprises a computer numerical controlled (CNC) machined mould component.

Ideally, the or each mould component is formed by additive manufacturing.

Ideally, the or each upper mould component comprises a die cast mould component.

Ideally, the method involves the step of arranging at least one cover layer over the encapsulant structure/body of softened or molten encapsulant before the compressing the body of encapsulant.

Ideally, the compression laminating step and compression moulding step involves compressing the at least one cover layer and the encapsulant structure/body of softened or molten encapsulant to impart the three-dimensional surface contour in the encapsulant and cover layer and bond the encapsulant and cover layer.

Ideally, the method involves the step of printing a colouring means onto one or more layers of the photovoltaic roofing slate before applying heat to the encapsulant structure or compressing the body of softened or molten encapsulant.

Ideally, the method involves the step of printing the colouring means onto an internally facing surface of one or more layers of the photovoltaic roofing slate.

Ideally, the method involves the step of printing the colouring means onto an internally facing surface of the at least one cover layer.

By "internally facing" we mean facing towards the at least one photovoltaic cell when the bonded laminate is formed in the method.

Ideally, the method involves the step of imparting the three-dimensional surface contour in a glass cover layer, followed by the step of arranging the glass cover layer over the encapsulant structure/body of softened or molten encapsulant, followed by the step of compressing the glass cover layer/encapsulant structure/body of softened or molten encapsulant to form the bonded laminate.

According to a fifth aspect of the invention there is provided a kit of parts for forming an electrically connectable photovoltaic roofing slate, the kit of parts comprising:
a photovoltaic roofing slate body according to the first or second aspects of the invention;
a junction box; and
a junction box fitting arrangement.

Advantageously, the junction box allows the photovoltaic roofing slate to electrically connect to one or more further photovoltaic roofing slates and/or one or more electrical energy storage or conversion means, such as a battery or an inverter.

Ideally, the photovoltaic roofing slate body has any of the features of the photovoltaic roofing slate of the first or second aspects of the invention.

Ideally, the photovoltaic roofing slate is manufactured by the method of the third or fourth aspects of the invention.

Ideally, the junction box comprises a housing, wherein the junction box fitting arrangement comprises an adhesive for securing the housing of the junction box to the backsheet.

Ideally, the junction box comprises a positive electrical lead and a negative electrical lead.

According to a sixth aspect of the invention, there is provided a tooling assembly comprising:
an arrangement for producing a mould component for compressing one or more components of the photovoltaic roofing slate for imparting a three-dimensional surface contour for reflecting visible light in use to provide an appearance of a natural slate.

Ideally, the arrangement for producing a mould component comprises a means for producing a cast of a natural slate.

Ideally, the arrangement for producing a mould component comprises a means for producing a digital model of a natural slate.

Ideally, the tooling assembly can be applied to produce a mould for producing the slate of the first, second and/or fifth aspects of the invention and/or for use in the method of the third or fourth aspects of the invention.

According to a seventh aspect of the invention there is provided a method of forming one or more components of a tooling assembly comprising:
taking a cast of a natural slate to form a mould component, wherein the mould component has a three-dimensional surface contour for reflecting visible light in use to provide an appearance of a natural slate.

Ideally, the method of the seventh aspect of the invention can be applied to produce a tooling assembly according to the sixth aspect of the invention.

According to an eighth aspect of the invention there is provided an assembly of tools for manufacturing a photovoltaic roofing slate for forming an outer covering layer of a roof, the assembly of tools comprising a compression moulding assembly for imparting a three-dimensional surface contour in an upper surface of the photovoltaic roofing slate, wherein the three-dimensional surface contour is suitable for reflecting visible light in use to provide an appearance of a natural slate, the compression moulding assembly comprising a mould component suitable for imparting the three-dimensional surface contour over at least a portion of at least one photovoltaic cell of the photovoltaic roofing slate.

Ideally, the assembly of tools is used to produce a photovoltaic roofing slate according to the first or second aspects of the invention.

The skilled person will appreciate that all preferred or optional features of the invention described with reference to only some aspects or embodiments of the invention may be applied to all aspects of the invention.

It will be appreciated that optional features applicable to one aspect of the invention can be used in any combination, and in any number. Moreover, they can also be used with any of the other aspects of the invention in any combination and in any number. This includes, but is not limited to, the dependent claims from any claim being used as dependent claims for any other claim in the claims of this application.

The invention will now be described with reference to the accompanying drawings which show a single embodiment of a photovoltaic roofing slate according to the invention by way of example only.

### BRIEF DESCRIPTION OF THE DRAWINGS

The invention will now be described, by way of example only, with reference to the accompanying drawings in which:
Figure 1 is a front perspective view of a photovoltaic roofing slate in an embodiment according to the invention;
Figure 2 is a black and white conversion of the front perspective view of the photovoltaic roofing slate of figure 1;
Figure 3 is a front perspective view of a photovoltaic roofing slate in an embodiment according to the invention;
Figure 4 is a black and white conversion of the front perspective view of the photovoltaic roofing slate of figure 3;
Figure 5 is a rear perspective view of a photovoltaic roofing slate in an embodiment according to the invention;
Figure 6 is a perspective view of a two-dimensional representation of a three-dimensional surface contour characteristic of a natural slate in an embodiment according to the invention;
Figure 7 is a perspective view of a two-dimensional representation of a three-dimensional surface contour characteristic of a natural slate in an embodiment according to the invention;
Figure 8 is an exploded section view of an arrangement of components of a photovoltaic roofing slate and mould component according to an embodiment of the invention;
Figure 9 is a method of manufacturing a photovoltaic roofing slate according to the invention; and
Figure 10 is an exploded view of a photovoltaic roofing slate in an embodiment according to the invention.

### DETAILED DESCRIPTION

The following description with reference to the accompanying drawings is provided to assist in a comprehensive understanding of various embodiments of the disclosure as defined by the claims and their equivalents. It includes various specific details to assist in that understanding but these are to be regarded as merely exemplary. Accordingly, those of ordinary skill in the art will recognise that various changes and modifications of the various embodiments described herein can be made without departing from the scope and spirit of the disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the disclosure. Accordingly, it should be apparent to those skilled in the art that the following description of various embodiments of the disclosure is provided for illustration purpose only and not for the purpose of limiting the disclosure as defined by the appended claims and their equivalents.

It is to be understood that the singular forms "a," "an," and "the" include plural referents unless the context clearly dictates otherwise.

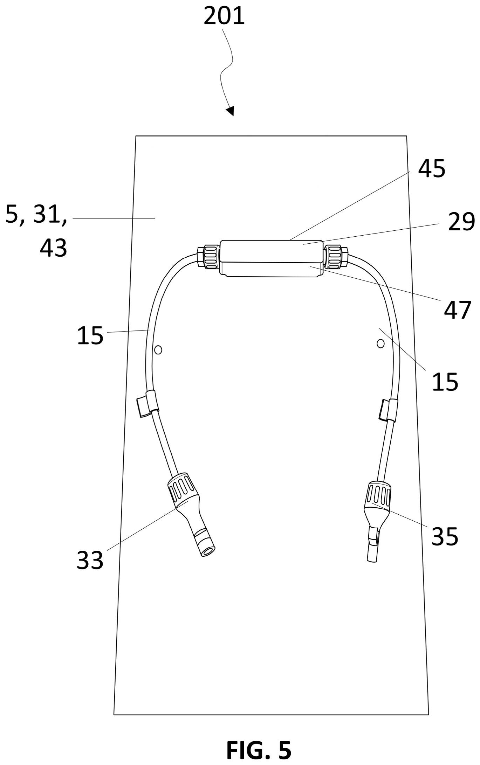

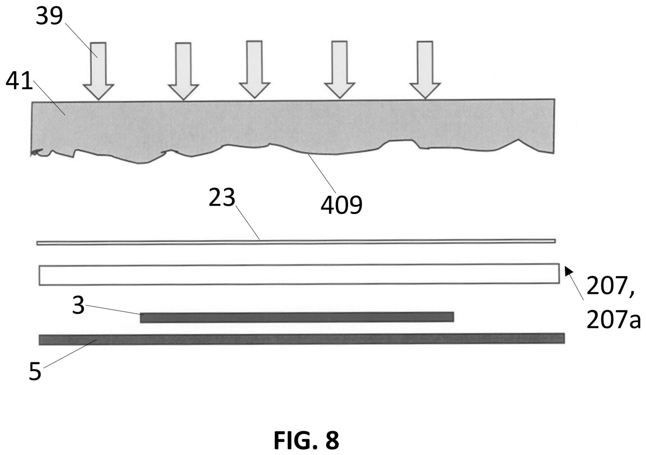

A photovoltaic roofing slate 1, 101, 201 for forming an overlapping outer covering layer of a roof is provided. The photovoltaic roofing slate 1, 101, 201 comprises at least one photovoltaic cell 3 encapsulated between backsheet 5 (see figure 5 and 8) and a body of encapsulant 7, 107. An upper surface of the photovoltaic roofing slate 1, 101, 201 comprises a three-dimensional surface contour 9, 109 for reflecting visible light in use to provide an appearance of a natural slate, the three-dimensional surface contour 9, 109 extending over at least a portion of the at least one photovoltaic cell 3.

The appearance of a natural slate is achieved by the three-dimensional surface contour 9, 109 being a surface contour which is an imitation or reproduction of a typical or actual surface contour of a natural slate produced from a natural slate-forming rock. A surface contour of a natural slate is formed when a surface of a slate-forming rock is exposed by separating a body of slate-forming rock along a plane of cleavage of the slate-forming rock.

Slates 1, 101 differ in that slate 1 has a first three-dimensional surface contour 9 and slate 101 has a second three-dimensional surface contour 109 different from the first contour 9.

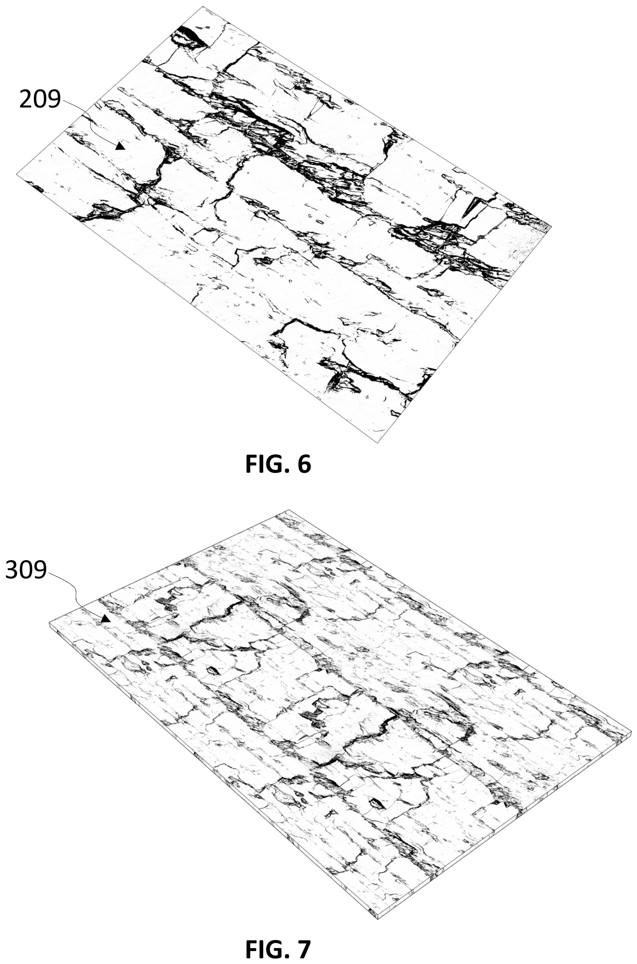

Figures 6 and 7 are two dimensional representations 209, 309 of two examples of three-dimensional surface contours according to the invention.

Figure 8 shows a three dimensional surface contour 409 of a mould component for imparting the three-dimensional surface contour in a body of encapsulant 207, 207a.

The three-dimensional surface contour 9, 109 has a matte grainy appearance comprising grains, waves, bands, stripes, ridges, crenulations, and/or ribbons.

The three-dimensional surface contour 9 has a riven appearance.

Three-dimensional surface contour 109 is finer than three-dimensional surface contour 9.

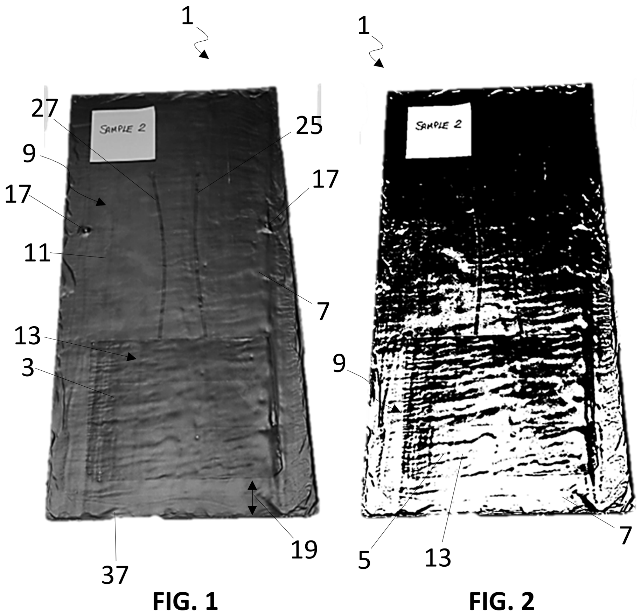

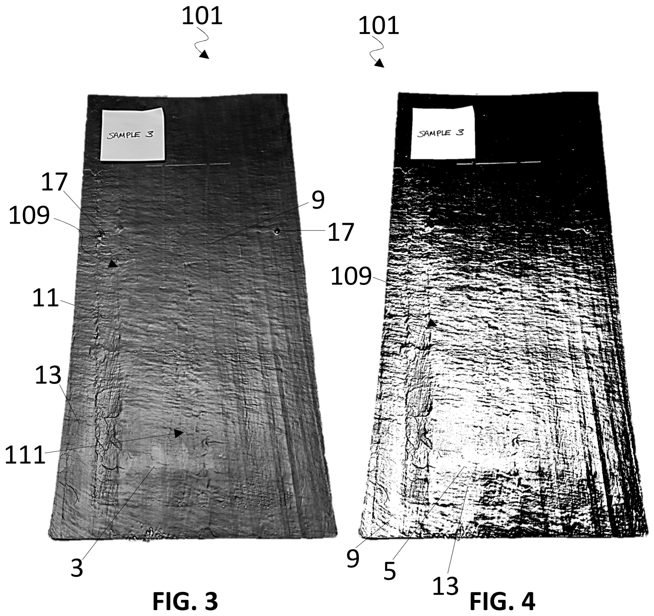

The photovoltaic roofing slate 1, 101, 201 comprises a lap-forming portion 11 (see figures 1 and 3) suitable for being overlapped in use by at least one adjacent roofing slate.

The photovoltaic roofing slate 1, 101, 201 comprises a portion 13 for being exposed to sunlight in use not being overlapped in use by any adjacent roofing slates.

The at least one photovoltaic cell 3 is arranged in the portion 13 exposed to sunlight in use.

The photovoltaic roofing slate 1, 101, 201 comprises one or more mechanical fastening receiving arrangements 15 for fastening the photovoltaic roofing slate 1, 101, 201 to one or more components of a structural framework of the roof in use.

The mechanical fastening receiving arrangements 15 comprise countersinks 17 in the body of encapsulant 7, 107.

The countersinks 17 are moulded portions 17 of the body of encapsulant 7, 107.

One or more of the mechanical fastening receiving arrangements 15 (see figure 5) are located in the lap-forming portion 11 of the photovoltaic roofing slate 1, 101, 201.

The one or more mechanical fastening receiving arrangements 15 located in the lap-forming portion 11 comprise nail holes 15 in the backsheet 5.

One or more of the mechanical fastening receiving arrangements are located in a portion of the photovoltaic roofing slate 1, 101, 201 located away from the lap forming portion 11. (not shown).

The one or more mechanical fastening receiving arrangements 15 located away from the lap-forming portion 11 comprise countersinks (not shown) in the body of encapsulant 7, 107.

The one or more mechanical fastening receiving arrangement located away from the lap-forming portion comprise holes for copper crampions and/or disc rivets in the backsheet.

The backsheet 5 is rectangular.

The backsheet 5 is between forty and sixty centimetres long.

The backsheet 5 is between twenty and thirty centimetres wide.

The photovoltaic roofing slate 1, 101, 201 is between five and fifteen centimetres thick. This thickness includes a junction box secured to an underside surface of the backsheet. The backsheet/cell/encapsulant/front layer laminate is less than five centimetres thick. The backsheet/cell/encapsulant/front layer laminate is between one and five centimetres thick. The backsheet/cell/encapsulant/front layer laminate is less than one centimetre thick.

The at least one photovoltaic cell 3 is rectangular.

The at least one photovoltaic cell 3 is square.

The at least one photovoltaic cell 3 has an angular orientation the same as that of the backsheet 5.

There is a minimum separation 19 (see figure 1) between the at least one photovoltaic cell 3 and side edge portions of the backsheet 5.

The minimum separation is between one and five centimetres.

The body of encapsulant 7, 107 covers the portion of the photovoltaic roofing slate 1, 101, 201 for being exposed to sunlight in use.

The body of encapsulant 7, 107 covers the lap-forming portion 11 of the photovoltaic roofing slate 1, 101, 201.

The body of encapsulant 7, 107 covering the lap-forming portion 11 of the photovoltaic roofing slate 1, 101, 201 does not comprise the three-dimensional surface contour 9, 109.

The body of encapsulant 7, 107 entirely covers an upper face of the backsheet 5.

The three-dimensional surface contour 9, 109 entirely covers the body of encapsulant 7, 107.

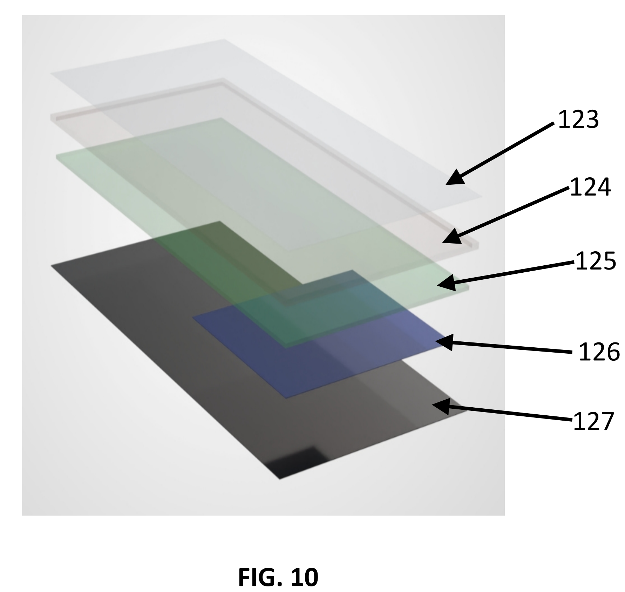

The body of encapsulant 7, 107 does not comprise any glass. Photovoltaic roofing slate 301 of figure 10 does comprise an internal light-transmitting layer in the form of glass layer 125 (further detail below).

The photovoltaic roofing slate 1, 101, 201 comprises a central portion.

The photovoltaic roofing slate 1, 101, 201 comprises one or more edge portions.

The at least one photovoltaic cell 3 is located in the central portion of the photovoltaic roofing slate 1, 101, 201.

The one or more edge portions of the photovoltaic roofing slate 1, 101, 201 surround the central portion of the photovoltaic roofing slate 1, 101, 201.

The body of encapsulant 7, 107 is arranged over the central portion and the one or more edge portions.

The body of encapsulant 7, 107 has the same composition over the central portion as over the one or more edge portions of the photovoltaic roofing slate 1, 101.

The photovoltaic roofing slate 1, 101 comprises a colouring arrangement.

The colouring arrangement causes the photovoltaic roofing slate 1 to have any one of: a grey appearance or a grey-blue appearance, when reflecting visible light in use, or any other colour appearance characteristic of natural slate.

The colouring arrangement provides a darkening effect to the photovoltaic roofing slate 1, 101 when reflecting visible light in use.

The colouring arrangement comprises one or more layers of coloured material.

The colouring arrangement comprises one or more layers of coloured polymeric material.

The colouring arrangement comprises one or more layers of material comprising one or more pigments, dyes, or any other colourant substance.

The one or more layers of coloured material are arranged within the body of encapsulant 7, 107.

The one or more layers of coloured material are arranged between the body of encapsulant 7, 107 and the backsheet 5.

The one or more layers of coloured polymeric material comprise a coloured thermoplastic material.

The one or more layers of coloured polymeric material comprises coloured EVA.

The one or more layers of the coloured polymeric material comprises coloured PVB.

The one or more layers of coloured polymeric material comprises coloured POE.

The colouring arrangement comprises one or more print-coloured layers.

The colouring arrangement is printed onto the body of polymeric encapsulant 7, 107.

The colouring arrangement is printed onto the backsheet 5.

The colouring means is printed onto the cover layer 23, 123. The colouring means is printed by digital printing. The colouring means is printed onto the glass/ETFE cover layer 23, 123.

The body of polymeric encapsulant 7, 107 comprises one or more layers of polymeric encapsulant material.

The body of polymeric encapsulant 7, 107 comprises one or more layers of thermoplastic encapsulant material.

The body of polymeric encapsulant 7, 107 comprises one or more layers of EVA.

The body of polymeric encapsulant 7, 107 comprises one or more layers of PVB.

The body of polymeric encapsulant 7, 107 comprises one or more layers of POE.

The body of polymeric encapsulant 7, 107 comprises one or more layers of ETFE.

Referring to figure 7 which shows a further photovoltaic roofing slate 301 according to the invention, the photovoltaic roofing slate 301 differs from the other embodiments shown in the drawings in that slate 301 comprises at least one internal light-transmitting layer 125 located between the at least one photovoltaic cell 126 and encapsulant 124. Backsheet 127 provides the same function as in the other embodiments.

The at least one internal light-transmitting layer 125 comprises a rigid layer 125.

The at least one internal light-transmitting layer 125 is located between the at least one photovoltaic cell 126 and the colouring means disposed on the cover layer 123. The internal light-transmitting layer 125 is a glass layer.

Advantageously, the internal light-transmitting layer 125 increases the rigidity of the photovoltaic roofing slate 301. Further advantageously, the internal light-transmitting layer 125 increases the distance between the colouring means disposed on the cover layer 123 and the at least one photovoltaic cell 126. As solar radiation incident on the photovoltaic roofing slate 301 passes the light-absorbent colourants in the colouring means disposed on the cover layer 123, the greater distance between the colouring means and the at least one photovoltaic cell 126 provided by layer 125 allows the solar radiation to spread and cover a greater area on the at least one photovoltaic cell, increasing efficiency of the photovoltaic roofing slate 301, by allowing for example more excitation in the semiconductor due to an increase in photons absorption.

The least one internal light-transmitting layer 125 comprises a glass layer 125.

The least one internal light-transmitting layer 125 comprises a flat glass layer 125.

Referring again to the figure 5, the backsheet 5 is rigid.

The backsheet 5 rigidifies the photovoltaic roofing slate 1, 101.

The backsheet 5 comprises one or more layers.

The backsheet 5 comprises one or more polymeric layers.

The backsheet 5 comprises one or more layers of polyvinyl fluoride.

The backsheet 5 comprises one or more layers of polyethylene terephthalaye.

The backsheet 5 comprises adhesive to hold together a plurality of layers of the backsheet 5.

The backsheet 5 comprises a metal plate.

The backsheet 5 comprises a glass plate.

The backsheet 5 comprises glass-reinforced plastic.

The backsheet 5 comprises Kevlar^{®}.

The photovoltaic roofing slate 1, 101 comprises a cover layer 23 (see figure 6), 123 (figure 10).

The cover layer 23, 123 comprises a layer of polymeric material.

The cover layer 23, 123 comprises a layer of fluoropolymer material.

The cover layer 23, 123 comprises a layer of ETFE.

An upper surface of the cover layer 23 comprises the three-dimensional surface contour 9, 109 for reflecting visible light in use to provide an appearance of a natural slate.

A junction box 29 is adhered to an underside face 31 of the backsheet 5.

The backsheet 5 comprises one or more through holes for positive and negative electrical leads, 25, 27 (see figure 1) from the at least one photovoltaic cell 3 to pass from a top face of the backsheet to an underside face of the backsheet the junction box 29 (see figure 5).

The photovoltaic roofing slate 1, 101 comprises a glare-reducing arrangement (not shown).

The glare reducing arrangement comprises a surface treatment of one or more layers of the photovoltaic roofing slate 1, 101.

The glare reducing arrangement comprises a surface treatment of one or more layers of the body of encapsulant 7, 107.

The glare reducing arrangement comprises a surface treatment of the cover layer 23.

The junction box 29 comprises positive and negative electrical connectors 33, 35 for connecting the photovoltaic roofing slate 1, 101 to an adjacent photovoltaic roofing slate, a battery storage system, and/or an electrical inverter.

The three-dimensional surface contour 9, 109 comprises a broad and generally planar central portion arranged about the central portion of the photovoltaic roofing slate 1, 101.

The body of encapsulant 7, 107 comprises one or more edge portions arranged about the edge portions of the photovoltaic roofing slate 15.

The at least one photovoltaic cell 3 is arranged under the broad and generally planar central portion of the three-dimensional surface contour 9, 109.

The body of encapsulant 7, 107 in the broad and generally planar central portion has a substantially uniform thickness.

The three-dimensional surface contour 9, 109 comprises one or more edge portions arranged about the edge portions of the photovoltaic roofing slate 1, 101, 201.

The body of encapsulant 7, 107 in the one or more edge portions of the slate 1, 101, 201 terminate at one or more edges of the backsheet 5.

The one or more edge portions of the body of encapsulant 7, 107 terminate at one or more edges of the backsheet 5.

The body of encapsulant 7, 107 in the one or more edge portions of the slate decrease in thickness from the broad and generally planar central portion towards the one or more terminating edges of the body of encapsulant 7, 107.

The one or more edge portions of the body of encapsulant 7, 107 comprise a portion of the three-dimensional surface contour 9, 109.

The one or more edge portions of the three-dimensional surface contour 9, 109 is an imitation or reproduction of a typical or actual edge surface contour of a natural slate produced by dressing a natural slate using a traditional dressing machine or using manual techniques. The edge surface contour of a natural slate comprises stepped surfaces between planes of the natural slate forming rock.

The one or more edge portions of the body of encapsulant 7, 107 and the broad and generally planar central portion are formable from the same single piece of encapsulant 207, see figure 8.

The one or more terminating edges of the body of encapsulant 7, 107 are generally straight.

The one or more terminating edges of the body of encapsulant 7, 107 comprise one or more notches 37 (see figure 1). Advantageously, this provides an appearance of a natural slate.

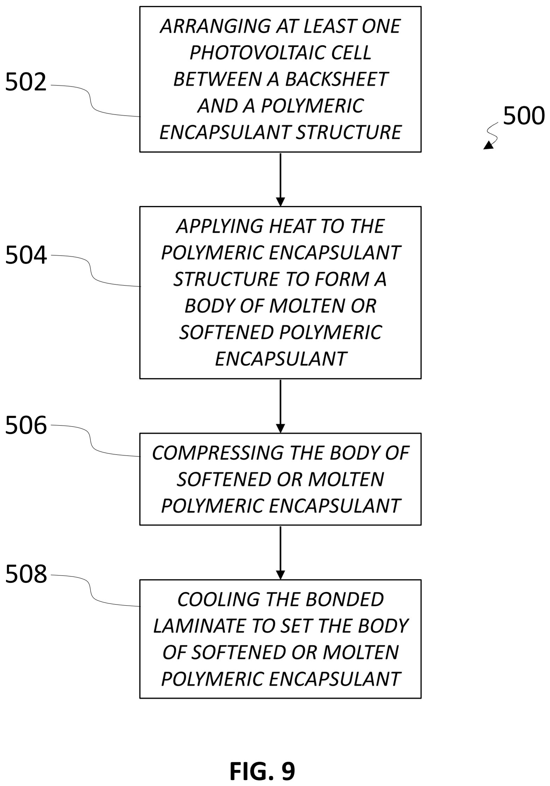

According to a third aspect of the invention there is provided a method 500 shown in figure 9 of manufacturing a photovoltaic roofing slate for forming an overlapping outer covering layer of a roof. In one embodiment, method 500 is performed with the arrangement shown in figure 8. With reference to figure 8, the method 500 comprises the step 502 of arranging at least one photovoltaic cell 3 between a backsheet 5 and a polymeric encapsulant structure 7.

Step 504 involves applying heat to the polymeric encapsulant structure 207 (shown in exploded view in figure 8) to form a body of molten or softened polymeric encapsulant 207a (exploded view). Step 506 involves compressing the body of softened or molten polymeric encapsulant 207a (indicated by arrows 39 of figure 8) against the at least one photovoltaic cell 3 and the backsheet 5 to form a bonded laminate and impart a three-dimensional surface contour 409 in the body of softened or molten polymeric encapsulant 207a for reflecting visible light in use to provide an appearance of a natural slate, the three-dimensional surface contour 409 extending over at least a portion of the at least one photovoltaic cell 3. Step 508 involves cooling the bonded laminate to set the body of softened or molten polymeric encapsulant 207a.

The method 500 is suitable for manufacturing the photovoltaic roofing slate 11, 101 according to the first or second aspect of the invention.

The step 506 of compressing the body of softened or molten polymeric encapsulant 207a to impart a three-dimensional surface contour 409 is performed after the step 502 of arranging at least one photovoltaic cell 3 between a backsheet 5 and a polymeric encapsulant structure 207.

In one example, step 506 of compressing the body of softened or molten polymeric encapsulant 207a against the at least one photovoltaic cell 3 and the backsheet 5 involves two compression steps: a compression-laminating step to form a bonded laminate and a compression moulding step to impart the three-dimensional surface contour 409.

The step 506 of compressing the body of softened or molten polymeric encapsulant to impart the three-dimensional surface contour may involve a plurality of compression moulding steps.

The compression-laminating step is performed before the compression moulding step is performed. A first mould component (not shown) is used in the compression-laminating step and a second mould component 41 is used in the compression moulding step. The first mould component used in the compression-laminating step is in the form of a flat plate. The second mould component 41 used in the compression moulding step is shaped to impart the three-dimensional surface contour 409. The method may comprise any number of compression-laminating and compression moulding steps performed sequentially.

In another example, the step 506 of compressing the body of softened or molten polymeric encapsulant against the at least one photovoltaic cell 3 and the backsheet 5 involves a single laminating and moulding step. In this example, a single mould component 41 shaped to impart the three-dimensional surface contour 409 is used in the single laminating and moulding step.

The step 504 of applying heat to the polymeric encapsulant structure 207 to form a body of molten or softened polymeric encapsulant 207a is performed at the same time as the step 506 of compressing the body of softened or molten polymeric encapsulant 207a against the at least one photovoltaic cell 3 and the backsheet 5.

The step 504 of applying heat to the polymeric encapsulant structure 207 is performed before the step 506 of compressing the body of softened or molten polymeric encapsulant 207a.

The step 504 of applying heat to the polymeric encapsulant structure 207 is performed before and during the step 506 of compressing the body of softened or molten polymeric encapsulant 207a.

In another example, the step 504 of applying heat to the polymeric encapsulant structure 207 ceases before the step 506 of compressing the body of softened or molten polymeric encapsulant 207a is commenced.

The step 508 of cooling the laminate to set the body of softened or molten polymeric encapsulant 207a is performed at the same time as the step 506 of compressing the body of softened or molten polymeric encapsulant 207a against the at least one photovoltaic cell 3 and the backsheet 5.

The step 508 of cooling the laminate is performed after the step 506 of compressing the body of softened or molten polymeric encapsulant 207a.

The step 508 of cooling the laminate is performed during and after the step 506 of compressing the body of softened or molten polymeric encapsulant 207a.

The step 506 of compressing the body of softened or molten polymeric encapsulant 207a ceases before the step 508 of cooling the laminate is commenced.

The step 508 of cooling the laminate is performed after the step 504 of applying heat to the polymeric encapsulant structure 207.

The step 504 of applying heat to the polymeric encapsulant structure 207 is ceased before the step 508 of cooling the laminate is commenced.

The step 506 of compressing the body of softened or molten polymeric encapsulant 207a is performed in one or more compression moulding presses.

Mould component 41 is a mould component of one of the compression moulding presses.

The step 506 of compressing the body of softened or molten polymeric encapsulant 207a is performed in one or more vacuum compression moulding presses.

The step 504 of applying heat to the polymeric encapsulant structure 207 is performed in one or more compression moulding presses.

The step 506 of compressing the body of softened or molten polymeric encapsulant 207a involves using hydraulic pressure.

The step 506 of compressing the body of softened or molten polymeric encapsulant 207a involves using pneumatic pressure.

The method 500 involves the step of forming mechanical fastening receiving arrangement 15 in the backsheet 5.

The step of forming mechanical fastening receiving arrangement 15 in the backsheet 5 is performed before the step 502 of arranging at least one photovoltaic cell 3 between a backsheet 5 and a polymeric encapsulant structure 207.

The step of forming mechanical fastening receiving arrangement 15 in the backsheet 5 involves drilling nail holes 15 into the backsheet 5.

The step 502 involves arranging a single piece of the polymeric encapsulant structure 207 entirely covering an upper face of the backsheet 5 with the polymeric encapsulant structure 207.

The step 506 involves compressing with mould component 41 an entire upper surface of the body of softened or molten polymeric encapsulant 207a.

The or each mould component comprises a computer numerical controlled (CNC) machined mould component.

The or each mould component is formed by additive manufacturing.

The or each upper mould component comprises a die cast mould component.

Referring to figure 10, a modified version of method 500 would include a step (not shown in figure 9) of positioning the glass internal light-transmitting layer between the cell and the encapsulant before heating and compressing the encapsulant and cover layer.

According to a fifth aspect of the invention there is provided a kit of parts for forming an electrically connectable photovoltaic roofing slate 201, the kit of parts comprising:
a photovoltaic roofing slate 43 according to the first or second aspects of the invention;
a junction box 29; and
a junction box fitting arrangement,

The photovoltaic roofing slate 201 has any of the features of the photovoltaic roofing slate 1, 101 of the first or second aspects of the invention.

The photovoltaic roofing slate 201 is manufactured by the method 500 of the third aspect of the invention or the method of the fourth aspect of the invention.

The junction box 29 comprises a housing 45, wherein the junction box fitting arrangement comprises an adhesive for securing the housing of the junction box 29 to the backsheet 5.

The junction box comprises positive and negative electrical connectors 33, 35.

According to a sixth aspect of the invention, there is provided a tooling assembly comprising:
an arrangement for producing a mould component for compressing one or more components of the photovoltaic roofing slate for imparting a three-dimensional surface contour for reflecting visible light in use to provide an appearance of a natural slate.

The arrangement for producing a mould component comprises a means for producing a cast of a natural slate.

The arrangement for producing a mould component comprises a means for producing a digital model of a natural slate.

The tooling assembly can be applied to produce a mould for producing the slate of the first, second and/or fifth aspects of the invention and/or for use in the method of the third or fourth aspects of the invention.

According to a seventh aspect of the invention there is provided a method of forming one or more components of a tooling assembly comprising:
taking a cast of a natural slate to form a mould component, wherein the mould component has a three-dimensional surface contour for reflecting visible light in use to provide an appearance of a natural slate.

The method of the seventh aspect of the invention can be applied to produce a tooling assembly according to the sixth aspect of the invention.

The skilled person will appreciate that all preferred or optional features of the invention described with reference to only some aspects or embodiments of the invention may be applied to all aspects of the invention.

It will be appreciated that optional features applicable to one aspect of the invention can be used in any combination, and in any number. Moreover, they can also be used with any of the other aspects of the invention in any combination and in any number. This includes, but is not limited to, the dependent claims from any claim being used as dependent claims for any other claim in the claims of this application.

In relation to the detailed description of the different embodiments of the invention, it will be understood that one or more technical features of one embodiment can be used in combination with one or more technical features of any other embodiment where the transferred use of the one or more technical features would be immediately apparent to a person of ordinary skill in the art to carry out a similar function in a similar way on the other embodiment.

The features disclosed in the foregoing description or the following drawings, expressed in their specific forms or in terms of a means for performing a disclosed function, or a method or a process of attaining the disclosed result, as appropriate, may separately, or in any combination of such features be utilised for realising the invention in diverse forms thereof.

## Claims

1. A photovoltaic roofing slate for forming an outer covering layer of a roof, the photovoltaic roofing slate comprising at least one photovoltaic cell encapsulated between a backsheet and a body of encapsulant, wherein an upper surface of the photovoltaic roofing slate comprises a three-dimensional surface contour for reflecting visible light in use to provide an appearance of a natural slate, the three dimensional surface contour extending over at least a portion of the at least one photovoltaic cell.

2. A photovoltaic roofing slate as claimed in claim 1, wherein the three-dimensional surface contour is a reproduction of a typical or actual surface contour of a natural slate produced from a natural slate-forming rock.

3. A photovoltaic roofing slate as claimed in any preceding claim, wherein the three-dimensional surface contour entirely covers the upper surface of the photovoltaic roofing slate.

4. A photovoltaic roofing slate as claimed in any preceding claim, wherein the body of encapsulant entirely covers an upper face of the backsheet.

5. A photovoltaic roofing slate as claimed in any preceding claim, wherein the body of encapsulant comprises one or more layers of encapsulant material.

6. A photovoltaic roofing slate as claimed in claim 5, wherein the one or more layers of encapsulant material comprise one or more layers of EVA and/or one or more layers of PVB and/or one or more layers of POE.

7. A photovoltaic roofing slate as claimed in any preceding claim, wherein the photovoltaic roofing slate comprises one or more nail holes in the backsheet for fastening the photovoltaic roofing slate to one or more components of a structural framework of the roof.

8. A photovoltaic roofing slate as claimed in any preceding claim, wherein the photovoltaic roofing slate comprises a cover layer comprising a layer of ETFE or glass comprising an upper surface having the three-dimensional surface contour.

9. A photovoltaic roofing slate as claimed in claim 8 , wherein the photovoltaic roofing slate comprises a colouring means causing the photovoltaic roofing slate to have an appearance characteristic of a natural slate when reflecting visible light in use, wherein the colouring means comprises one or more layers of a colourant containing composition printed onto a surface of the cover layer facing the at least one photovoltaic cell.

10. A photovoltaic roofing slate as claimed in claim 9, wherein the colourant containing composition of the colouring means is printed onto the cover layer in a pattern of small transparent holes surrounded by the colourant containing composition.

11. A photovoltaic roofing slate as claimed in any preceding claim, wherein the photovoltaic roofing slate comprises one or more layers of glass located between the at least one photovoltaic cell and the body of encapsulant.

12. A method of manufacturing a photovoltaic roofing slate for forming an outer covering layer of a roof, the method involving the steps of:
arranging at least one photovoltaic cell between a backsheet and an encapsulant structure;
applying heat to the encapsulant structure to form a body of molten or softened encapsulant;
compressing the body of softened or molten encapsulant against the at least one photovoltaic cell and the backsheet to form a bonded laminate;
imparting a three-dimensional surface contour in an upper surface of the photovoltaic roofing slate for reflecting visible light in use to provide an appearance of a natural slate, the three-dimensional surface contour extending over at least a portion of the at least one photovoltaic cell; and
cooling the bonded laminate to set the body of softened or molten encapsulant.

13. A method of manufacturing a photovoltaic roofing slate according to claim 12, wherein the method involves a step of positioning an internal light-transmitting layer between the cell and the encapsulant structure before heating and compressing the encapsulant structure.

14. A method of manufacturing a photovoltaic roofing slate according to claim 12 or 13, wherein the method involves the step of printing a colouring means onto one or more layers of the photovoltaic roofing slate, the step of printing the colouring means involving a step of printing a colourant containing composition of the colouring means onto the one or more layers of the photovoltaic roofing slate in a pattern of small transparent holes surrounded by the colourant containing composition, the method involving printing the colouring means before the step of applying heat to the encapsulant structure or compressing the body of softened or molten encapsulant.

15. An assembly of tools for manufacturing a photovoltaic roofing slate for forming an overlapping outer covering layer of a roof, the assembly of tools comprising a compression moulding assembly for imparting a three-dimensional surface contour in an upper surface of a body of encapsulant of the photovoltaic roofing slate, wherein the three-dimensional surface contour is suitable for reflecting visible light in use to provide an appearance of a natural slate, the compression moulding assembly comprising a mould component suitable for imparting the three-dimensional surface contour over at least a portion of at least one photovoltaic cell of the photovoltaic roofing slate.
